# FASCICULE DE BREVET EUROPEEN

(11) **EP 2 512 894 B1**
(45) Date de publication et mention de la délivrance du brevet: **15.08.2018**
(21) Numéro de dépôt: 10805464.4
(22) Date de dépôt: 06.12.2010
(51) Int. Cl.: B60K 6/387, B60W 20/40, B60K 6/52, B60W 10/02, B60W 10/08, B60W 20/00

(54) **PROCEDE ET SYSTEME D'ACCOUPLEMENT D'UNE MACHINE ELECTRIQUE SUR UN TRAIN ROULANT DE VEHICULE, NOTAMMENT D'UN VEHICULE AUTOMOBILE HYBRIDE**
VERFAHREN UND SYSTEM ZUR KOPPLUNG EINER ELEKTRISCHEN MASCHINE AN DAS FAHRGESTELL EINES FAHRZEUGES, IM BESONDEREN EINES HYBRIDKRAFTFAHRZEUGES
METHOD AND SYSTEM FOR COUPLING AN ELECTRIC MACHINE TO A VEHICLE RUNNING GEAR, ESPECIALLY FOR A HYBRID MOTOR VEHICLE

(30) Priorité: 17.12.2009 FR 0959086
(43) Date de publication de la demande: 24.10.2012
(73) Titulaire: PSA Automobiles SA, 78300 Poissy (FR)
(72) Inventeur: SCHAEFFER, Eric, F-75013 Paris (FR); GALINAUD, Florian, F-75013 Paris (FR)
(74) Mandataire: Rosenberg, Muriel Sylvie
(86) Numéro de dépôt international: PCT/FR2010/052614
(87) Numéro de publication internationale: WO 2011/080436

(56) Documents cités:
- FR-A1- 2 933 247
- US-A- 6 008 606
- US-A1- 2004 147 366
- US-B1- 6 321 865

## Description

L'invention concerne un procédé et un système d'accouplement d'une machine électrique sur un train roulant d'un véhicule, notamment d'un véhicule automobile hybride, lorsque le véhicule est roulant.

Le procédé et le système sont particulièrement adaptés à un véhicule hybride qui utilise par ailleurs un moteur thermique, de façon à faire contribuer la machine électrique à la traction du véhicule.

Le document FR2723553 divulgue par exemple un véhicule automobile comprenant un système de commande sélective pour actionner séparément ou simultanément les chaînes de traction électrique et thermique.

Le document US5403244 divulgue une chaîne de traction électrique de véhicule à couplage de transmission directe en utilisant des moyens de synchronisation basés sur des plaques de friction de type disques d'embrayage. Les accouplements de type embrayage sont générateurs de perte d'énergie.

Pour augmenter le rendement, l'état connu de la technique s'oriente vers des accouplements de type crabots. Ainsi le document FR-A-2 905 438 décrit un procédé de pilotage mettant en oeuvre deux crabots dans lequel un effort exercé en translation sur l'un des crabots pour l'approcher de l'autre crabot, est modulé en fonction de différentes phases d'approche.

On connait le document de brevet FR-A-2 933 247 divulguant le préambule de la revendication 1.

Un but de la présente invention est de réaliser un accouplement simplifié sans embrayage qui ne nécessite pas de moduler un effort en translation, particulièrement quand le véhicule est roulant.

Pour atteindre ce but, l'invention a pour objet un procédé d'accouplement d'une machine électrique avec des roues de train roulant d'un véhicule lorsque le véhicule est roulant, comprenant deux étapes activées successivement à partir d'une demande d'accouplement :
- une étape de pilotage de la machine électrique en régime, dans laquelle une consigne de vitesse de rotation est appliquée à la machine électrique de façon à réduire un écart entre un régime de crabot amont solidaire en rotation de la machine électrique et un régime d'un crabot aval solidaire en rotation des roues ; et
- une étape de couplage activée suite à un écart de régime inférieur à un seuil prédéterminé, dans laquelle on asservi la machine électrique sur une consigne de couple et on rapproche les crabots jusqu'à obtenir un état craboté des deux crabots, la consigne de couple étant bornée par une fonction de limitation de la consigne de couple.

Particulièrement, la consigne de couple est bornée à une compensation de couple inertielle correspondant à une accélération maximale potentielle du véhicule.

Plus particulièrement, la consigne de vitesse est positionnée à une valeur du régime roue.

Avantageusement, l'étape de couplage est activée lorsque l'écart de régime reste inférieur au seuil prédéterminé pendant une durée de temporisation.

L'invention a aussi pour objet un système d'accouplement d'une machine électrique avec des roues de train roulant d'un véhicule lorsque le véhicule est roulant comprenant :
- un crabot amont solidaire en rotation de la machine électrique, un crabot aval solidaire en rotation des roues et un actionneur agencé pour rapprocher les deux crabots en translation le long d'un axe commun de rotation ; et
- un dispositif électronique agencé pour recevoir une demande d'accouplement, pour piloter la machine électrique en régime en lui appliquant une consigne de vitesse de rotation de façon à réduire un écart entre un régime du crabot amont et un régime du crabot aval, pour asservir la machine électrique sur une consigne de couple et pour rapprocher les crabots jusqu'à obtenir un état craboté des deux crabots, la consigne de couple étant bornée par une fonction de limitation de la consigne de couple.

Particulièrement, la consigne de couple est bornée à une compensation de couple inertielle correspondant à une accélération maximale potentielle du véhicule.

Plus particulièrement, la consigne de vitesse est positionnée à une valeur du régime roue.

Avantageusement, le dispositif électronique comprend en mémoire une durée de temporisation pour vérifier que l'écart de régime reste inférieur au seuil prédéterminé pendant ladite durée.

L'invention a encore pour objet un véhicule automobile comprenant un système conforme à l'invention.

L'invention sera mieux comprise, et d'autres buts, caractéristiques, détails et avantages de celle-ci apparaîtront plus clairement au cours de la description explicative qui va suivre d'un mode de réalisation particulier, actuellement préféré de l'invention, donné uniquement à titre d'exemple illustratif et non limitatif, en référence aux dessins schématiques annexés; dans lesquels :
- la figure 1 est une vue schématique d'un véhicule automobile hybride comportant un système d'accouplement selon l'invention ;
- la figure 2 est une vue schématique du système d'accouplement selon l'invention ;
- la figure 3 montre les étapes d'un procédé d'accouplement selon l'invention.

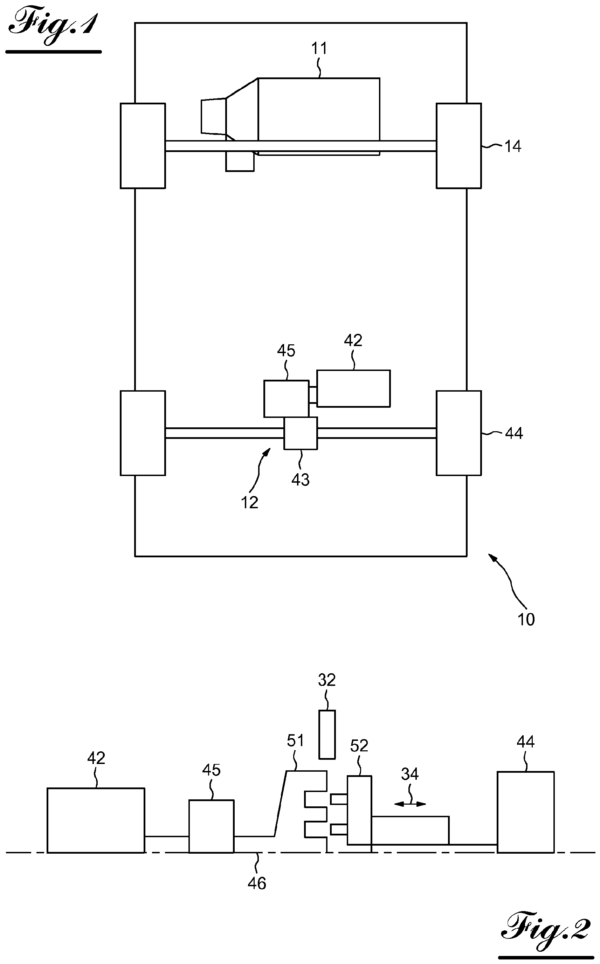

En référence à la figure 1, un véhicule 10 de type hybride, comprend un groupe motopropulseur 11 agencé pour entraîner deux roues avant 14 du véhicule 10, et un groupe motopropulseur 12 agencé pour entraîner deux roues arrière 44 appartenant à un même train roulant arrière du véhicule 10. Le groupe motopropulseur (GMP) 11 comprend de façon connue en soi, un moteur thermique situé ici à titre purement illustratif à l'avant du véhicule. Le groupe motopropulseur 12 comprend une machine électrique 42 reliée aux roues 44 par un mécanisme d'accouplement 43.

La figure 2 représente plus en détails le groupe motopropulseur 12 de la figure 1. Pour alléger la figure de façon à en faciliter la compréhension, l'axe de la machine électrique 42 et l'axe des roues 44 sont schématiquement repliés sur un même axe 46 au-dessus duquel sont simplement représentées les demi-parties de la machine électrique 42, du mécanisme d'accouplement 43 et d'un bloc sensé symbolisé les deux roues 44.

Dans le mécanisme d'accouplement 43, un système de crabotage comprend un crabot amont 51 et un crabot aval 52. Le crabot amont 51 est solidaire en rotation d'un réducteur 45 relié à l'arbre de sortie de la machine électrique 42. Le crabot aval 52 est solidaire en rotation des roues 44 via un mécanisme différentiel pour équilibrer de manière connue en soi, le couple entre les roues 44 du train arrière, notamment lorsqu'elles roulent à des vitesses différentes, par exemple dans un virage.

Le crabot 51 tourne autour de l'axe 46 à une vitesse de rotation proportionnelle ou égale à la vitesse de rotation de la machine électrique 42 et transmet un couple proportionnel au couple généré par la machine électrique 42 en conservant la puissance fournie par la machine électrique 42 à un facteur de rendement près qui résulte des pertes de transmission entre la machine électrique 42 et le crabot 51. Les pertes de transmission dans la machine électrique 42 et entre la machine électrique 42 et le crabot 51 peuvent être représentées par un couple de traînée de la partie amont du crabot 51.

Le crabot 52 tourne autour de l'axe 46 à une vitesse de rotation qui est fonction de la vitesse des roues 44. Un couple appliqué sur le crabot 52 est transmis aux roues 44. Lorsque le crabot 52 est désolidarisé du crabot 51 comme cela est représenté sur la figure 2, les roues 44 peuvent tourner ou ne pas tourner indépendamment de la vitesse de rotation de la machine électrique 42.

Le mécanisme d'accouplement 43 comprend un actionneur 34 agencé pour déplacer le crabot 52 en translation le long de l'axe 46. Chacune des faces en regard des crabots 51 et 52 est munie de dents et de cavités. Les dents d'un crabot sont dimensionnées pour venir se loger dans les cavités de l'autre crabot. Ainsi, lorsque les dents du crabot 52 font face aux cavités du crabot 51, comme cela est représenté sur la figure 2, l'actionneur 34 peut engager le crabot 52 en prise avec le crabot 51 de façon à rendre solidaire en rotation les crabots 51 et 52 autour de l'axe 46. Un capteur de position tout ou rien 32 est monté dans le mécanisme d'accouplement 43 pour détecter une position totalement engagée du crabot 52 dans le crabot 51.

L'indépendance en rotation des crabots 51 et 52 fait que les dents du crabot 52 ne sont pas nécessairement en face des cavités du crabot 51 lorsque l'actionneur 34 déplace le crabot 52 en translation le long de l'axe 46. Une difficulté apparait lorsque le véhicule est dans une situation roulante, pour engager rapidement et sans à-coups les crabots dès qu'un accouplement de la machine électrique du véhicule est demandé par le conducteur. L'architecture mécanique du système de groupe motopropulseur arrière, ne comprend pas d'embrayage et ne comprend pas non plus de synchroniseur. Le seul mouvement du système est une translation d'un ou des crabots 51, 52, exercée ou activée par l'actionneur 34. On rappelle que statistiquement, les échecs d'engagement dans les systèmes de crabotage se produisent souvent à cause d'une probabilité élevée de contact dent sur dent des crabots avant engagement de ceux-ci.

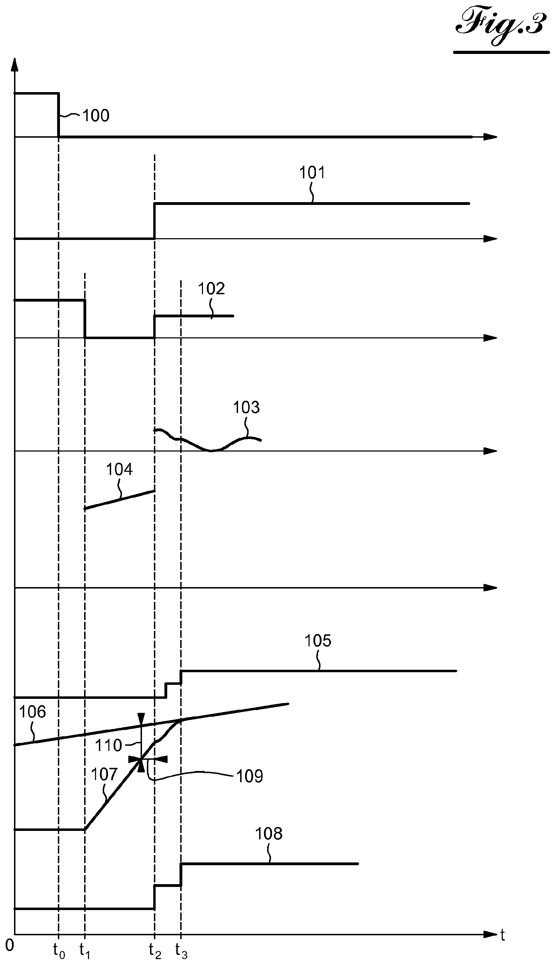

Pour remédier à ce problème, le groupe motopropulseur arrière comprend un dispositif électronique qui permet, comme nous allons l'expliquer à présent, un pilotage fin du couple de la machine électrique 42 en combinaison avec un pilotage séquentiel de l'actionneur 34 de crabotage de façon à atteindre un crabotage rapide et sans à-coups qui limite le nombre d'échecs ou d'arrêts sur crabot. Le dispositif électronique est relié à l'actionneur 34 et au capteur 32, dans le mécanisme d'accouplement 43. Le dispositif électronique est relié d'autre part à la machine électrique 42 par un générateur électrique régulé en courant. Le générateur électrique est par exemple alimenté de manière connue à partir d'une batterie, non représentée. Le dispositif électronique comprend d'autre part des circuits électroniques de traitement numérique ou analogique agencés et/ou programmés pour exécuter les étapes de procédé expliquées à présent en référence à la figure 3.

Pour expliquer les étapes du procédé la figure 3 représente l'état de différents signaux en fonction du temps.

Notamment, la courbe 100 représente le signal de requête de couplage pour une vitesse du véhicule supérieure ou égale à 5 km/H. Jusqu'à une date t0 à laquelle on reçoit une demande de couplage, le procédé est dans une étape initiale pour laquelle les crabots 51 et 52 sont séparés de sorte que la machine électrique 42 est désaccouplée des roues 44. Cet état est représenté par une valeur haute du signal sur la courbe 100 suivi à partir de l'instant t0 par un signal de valeur basse. On comprendra que les valeurs haute et basse sont ici de pures conventions et que l'étape initiale peut tout aussi bien être représentée par une valeur basse du signal suivi au-delà de t0 par une valeur haute.

La courbe 101 représente une consigne logique de positionnement de l'actionneur 34. Dans l'étape initiale du procédé qui précède l'instant t0, une première valeur logique de la consigne commande à l'actionneur de rester inactif, en d'autres termes de laisser les crabots 51 et 52 séparés.

La courbe 102 représente un signal numérique de mode de pilotage de la machine électrique 42. Dans l'étape initiale du procédé qui précède l'instant t0, ce signal numérique correspond à un état inerte de la machine électrique 42. En d'autres termes, la machine électrique 42 n'est pas alimentée en courant électrique.

La courbe 103 représente un signal de consigne de couple sur la machine électrique 42 qui est sans objet pendant l'étape initiale du procédé.

La courbe 104 représente un signal de consigne en régime de la machine électrique 42, sans objet lui aussi pendant l'étape initiale qui précède l'instant t0, dans laquelle la machine électrique est inerte.

La courbe 105 représente un signal généré par le capteur de position 32. Comme il a déjà été dit précédemment, dans l'étape initiale qui précède l'instant t0, le mécanisme d'accouplement 43 était décraboté indiqué ici par une valeur basse du signal de la courbe 105.

La courbe 106 représente le régime des roues 44 ramené au crabot 52. Dans l'étape initiale qui précède l'instant t0, le véhicule étant roulant, une croissance de la courbe 106 dénote par exemple un véhicule en phase d'accélération. L'intérêt du procédé, est de permettre le crabotage quel que soit les variations de vitesses du véhicule pendant toute la phase de crabotage.

La courbe 107 représente le régime de la machine électrique 42 ramené au crabot 51, c'est-à-dire tenant compte de l'éventuel rapport de réduction du réducteur 45. Dans l'étape initiale qui précède l'instant t0, la machine électrique 42 est par exemple dans un état de régime à vitesse nulle.

La courbe 108 représente l'état effectif du mécanisme d'accouplement qui n'est pas nécessairement traduit par un signal de mesure ou de commande mais qui peut correspondre à une variable interne d'un programme mettant en oeuvre le procédé pour qualifier les différents états par lesquels passe le mécanisme d'accouplement pendant la phase de crabotage.

A la date t0 à laquelle on reçoit la demande de couplage, le procédé entre dans une étape de contrôle au cours de laquelle le dispositif électronique vérifie si le mécanisme d'accouplement 43 est couplé ou découplé. En d'autres termes, le dispositif électronique vérifie si le capteur de position 32 indique une position couplée ou découplée des crabots 51 et 52. Si le mécanisme d'accouplement est découplé, le procédé quitte l'étape de contrôle à la date t₁ pour entrer dans une étape de pilotage de la machine électrique en mode régime. Dans l'étape de contrôle entre les instants t0 et t₁, la consigne logique de positionnement de l'actionneur 34 reste à sa valeur logique précédente comme on peut le noter sur la courbe 101. L'actionneur 34 reste inactif.

Comme on peut le noter sur la courbe 102, la machine électrique reste inerte le régime des roues 44 continu à évoluer au gré de la vitesse du véhicule comme indiqué sur la courbe 106.

Dans l'étape de pilotage de la machine électrique en mode régime, débutant à l'instant t₁, le signal numérique de mode de pilotage de la machine électrique 42 prend une valeur distinctive du mode de pilotage en mode régime. Le pilotage en mode régime de la machine électrique 42 consiste à réguler en vitesse le rotor de la machine électrique. De manière connue, un asservissement en vitesse de machine électrique comprend un premier étage qui génère une consigne de couple à fournir par la machine électrique pour annuler un écart de vitesse entre une consigne de vitesse du rotor et une mesure de vitesse du rotor reçue en retour. La consigne de couple générée par le premier étage est appliquée en entrée d'un deuxième étage qui alimente la machine électrique avec un courant auquel le couple, de manière connue, est proportionnel. Le couple ainsi généré permet d'imposer à la machine électrique une vitesse de rotation égale à la consigne. Dans l'étape de pilotage de la machine électrique en mode régime, le signal de consigne en régime de la machine électrique 42, comme indiqué par la courbe 104, suit le régime des roues comme indiqué par la courbe 106. En d'autres termes, si le véhicule est en phase d'accélération, la consigne de régime machine électrique est croissante et tout ralentissement provoque une inflexion en conséquence de la courbe 104. Le deuxième étage d'asservissement de la machine électrique n'est limité que par les capacités d'absorption en courant de la machine électrique. Le courant d'alimentation de la machine électrique alors au maximum des capacités d'absorption pour annuler les écarts de vitesses entre consigne et retour de mesure, provoque une monté en vitesse de la machine électrique uniformément accélérée pour rattraper, en la multipliant par le rapport de réduction, la vitesse correspondant au régime des roues. Ce phénomène se traduit par la rampe de la courbe 107 entre les instants t₁ et t₂ lorsque la courbe 106 de régime de roues traduit un régime de valeur élevée.

Lorsqu'un écart 110 de régime entre le régime des roues reporté sur la courbe 106 et le régime de la machine électrique mis à l'échelle en tenant compte du rapport de réduction pour être reporté sur la courbe 107, est inférieur à un seuil prédéterminé on lance une temporisation qui se termine à un instant t₂. Tant le seuil prédéterminé que la temporisation sont calibrables. Le seuil d'écart de régime est déterminé de façon à permettre un engagement du crabot amont avec le crabot aval sans ripage. Pour donner un ordre de grandeur en tenant compte de l'imprécision des mesures, une valeur de vingt tours par minute est acceptable. La temporisation a pour but de s'assurer que l'écart de vitesse est descendu en dessous du seuil de manière stable, c'est-à-dire que le franchissement du seuil n'est pas de nature intempestive. On peut par exemple partir d'une valeur de 50 ms pour la valeur de la temporisation et l'ajuster de façon à obtenir un fonctionnement optimal. D'autres manières d'obtenir cette fonctionnalité peuvent exister comme par exemple celle de mettre un filtre de constante de temps de l'ordre de la valeur de la temporisation sur l'écart de vitesse mesuré en entrée du premier étage de l'asservissement de la machine électrique.

A l'instant t₂, le procédé quitte l'étape de pilotage de la machine électrique en mode régime pour entrer dans une étape de pilotage de la machine électrique en mode couple. Le signal numérique de mode de pilotage de la machine électrique 42 change de valeur comme on peut le noter sur la courbe 102. Le changement de valeur du signal numérique de mode de pilotage agit sur l'asservissement de la machine électrique, notamment sur le deuxième étage qui détermine la valeur réelle du courant passant dans la machine électrique auquel est proportionnel le couple. Une fonction de limitation du courant en entrée du deuxième étage d'asservissement est abaissée à une valeur correspondante à une consigne de couple de la machine électrique. La consigne de courant générée par l'étage de vitesse vient alors saturer sur la limitation en courant. La valeur de la limitation est calculée de façon à compenser un couple inertiel correspondant à une accélération maximale potentielle du véhicule. A titre d'exemple illustratif et non limitatif cette valeur est définie dans une plage de tolérance de l'ordre de 2 Nm pour tenir compte de diverses incertitudes sur le couple. La boucle périphérique de vitesse obtenue par le premier étage d'asservissement permet d'assurer que la machine électrique ne parte pas en survitesse dans un cas ou le couple borné serait supérieur à celui nécessaire pour simplement maintenir la vitesse. La consigne de couple de la machine électrique appliquée à la limitation en courant, peut être variable comme on le note sur la courbe 103.

Simultanément au changement de valeur du signal numérique de mode de pilotage de la machine électrique 42 à l'instant t₂ sur la courbe 102, la consigne logique de positionnement de l'actionneur 34 change de valeur comme on le voit sur la courbe 101 pour faire entrer l'actionneur dans un mode actif. L'actionneur 34 fait alors passer le crabot 52 mobile de la position découplée à laquelle il était à l'instant t₂ jusqu'à une position couplée à l'instant t₃ notée sur la courbe 108. Entre les instants t₂ et t₃, la position des crabots est incertaine comme représentée par la courbe 105. La valeur de la durée t₃ - t₂ peut être prédéterminée en tenant compte de la course de déplacement du crabot mobile et de la force de l'actionneur. La valeur de l'instant t₃ peut aussi ne pas nécessiter d'être connue en tant que telle. En effet, la position crabotée ou couplée est détectée par la position actionneur de crabot et contrôlée par l'écart de régime nul. Au-delà de l'instant t₃, le mécanisme de couplage est en position crabotée comme indiqué par la courbe 105 et la machine électrique est couplée avec les roues comme l'indique la courbe 108. Le procédé de couplage est terminé.

En termes économiques, l'exploitation des possibilités de pilotage de la machine électrique tant en couple qu'en régime, associée à un actionneur simplifié, piloté de façon simple en mode tout ou rien, permet de réduire notablement les coûts par rapport à des systèmes plus complexes. Le groupe motopropulseur électrique peut être monté aussi bien à l'avant qu'à l'arrière du véhicule, sur un train roulant identique ou différent de celui sur lequel est monté le groupe moto propulseur thermique. Bien que non représenté sur la figure 2, un réducteur peut aussi exister entre le crabot aval et les roues. Le déplacement du crabot aval peut être remplacé par un déplacement du crabot amont.

## Revendications

1. Procédé d'accouplement d'une machine électrique (42) avec des roues (44) de train roulant d'un véhicule lorsque le véhicule est roulant, comprenant deux étapes activées successivement à partir d'une demande d'accouplement :
- une étape de pilotage de la machine électrique (42) en régime, dans laquelle une consigne de vitesse de rotation est appliquée à la machine électrique(42) de façon à réduire un écart entre un régime de crabot amont (51) solidaire en rotation de la machine électrique et un régime d'un crabot aval (52) solidaire en rotation des roues (44) ; et
- une étape de couplage activée suite à un écart (110) de régime inférieur à un seuil prédéterminé, dans laquelle on asservi la machine électrique (42) sur une consigne de couple et on rapproche les crabots (51, 52) jusqu'à obtenir un état craboté des deux crabots,
**caractérisé en ce que** la consigne de couple est bornée par une fonction de limitation de la consigne de couple.

2. Procédé d'accouplement selon la revendication 1, **caractérisé en ce que** la consigne de couple est bornée à une compensation de couple inertielle correspondant à une accélération maximale potentielle du véhicule.

3. Procédé selon l'une des revendications 1 ou 2, **caractérisé en ce que** la consigne de vitesse est positionnée à une valeur du régime roue.

4. Procédé selon l'une des revendications précédentes, **caractérisé en ce que** l'étape de couplage est activée lorsque l'écart de régime reste inférieure au seuil prédéterminé pendant une durée de temporisation.

5. Système d'accouplement d'une machine électrique (42) avec des roues (44) de train roulant d'un véhicule lorsque le véhicule est roulant, comprenant :
- un crabot (51) amont solidaire en rotation de la machine électrique (42), un crabot (52) aval solidaire en rotation des roues (44) et un actionneur (34) agencé pour rapprocher les deux crabots en translation le long d'un axe commun de rotation ; et
- un dispositif électronique agencé pour recevoir une demande d'accouplement, pour piloter la machine électrique (42) en régime en lui appliquant une consigne de vitesse de rotation de façon à réduire un écart entre un régime du crabot amont (51) et un régime du crabot aval (52) pour asservir la machine électrique (42) sur une consigne de couple et pour rapprocher les crabots (51, 52) jusqu'à obtenir un état craboté des deux crabots, **caractérisé en ce que** la consigne de couple est bornée par une fonction de limitation de la consigne de couple.

6. Système d'accouplement selon la revendication 5, **caractérisé en ce que** la consigne de couple est bornée à une compensation de couple inertielle correspondant à une accélération maximale potentielle du véhicule.

7. Système selon l'une des revendications 5 ou 6, **caractérisé en ce que** la consigne de vitesse est positionnée à une valeur du régime roue.

8. Système selon l'une des revendications 5 à 7, **caractérisé en ce que** le dispositif électronique comprend en mémoire une durée de temporisation pour vérifier que l'écart de régime reste inférieur au seuil prédéterminé pendante ladite durée.

9. Véhicule automobile comprenant un système selon l'une des revendications 5 à 8 pour exécuter le procédé selon l'une des revendications 1 à 4.

## Patentansprüche

1. Verfahren zum Koppeln einer elektrischen Maschine (42) mit Rädern (44) eines Fahrgestells eines Fahrzeugs, wenn das Fahrzeug fährt, das zwei Schritte umfasst, die nacheinander ausgehend von einer Kopplungsanfrage aktiviert werden:
- einen Drehzahlsteuerschritt der elektrischen Maschine (42), bei dem ein Drehzahlsollwert an die elektrische Maschine (42) derart angewandt wird, dass ein Unterschied zwischen einer Drehzahl einer stromaufwärtigen Kuppelmuffenklaue (51), die in Drehung mit der elektrischen Maschine verbunden ist, und einer Drehzahl einer stromabwärtigen Kuppelmuffenklaue (52), die fest in Drehung mit den Rädern (44) verbunden ist, verringert wird; und
- einen Schritt des Koppelns, der infolge eines Drehzahlunterschieds (110), der kleiner ist als ein vorbestimmter Schwellenwert, aktiviert wird, wobei die elektrische Maschine (42) auf einem Drehmomentsollwert gesteuert wird und die Kuppelmuffenklauen (51, 52) angenähert werden, bis ein formschlüssiger Zustand der zwei Kuppelmuffenklauen erhalten wird,
**dadurch gekennzeichnet, dass** der Drehmomentsollwert durch eine Einschränkungsfunktion des Drehmomentsollwerts beschränkt ist.

2. Kopplungsverfahren nach Anspruch 1, **dadurch gekennzeichnet, dass** der Drehmomentsollwert auf eine Trägheitsdrehmomentkompensation begrenzt ist, die einer maximalen potentiellen Beschleunigung des Fahrzeugs entspricht.

3. Verfahren nach einem der Ansprüche 1 oder 2, **dadurch gekennzeichnet, dass** der Drehzahlsollwert auf einem Wert der Raddrehzahl positioniert ist.

4. Verfahren nach einem der vorhergehenden Ansprüche, **dadurch gekennzeichnet, dass** der Kopplungsschritt aktiviert wird, wenn der Drehzahlunterschied während einer Verzögerungsdauer kleiner bleibt als ein vorbestimmter Schwellenwert.

5. Kupplungssystem einer elektrischen Maschine (42) mit Rädern (44) eines Fahrgestells eines Fahrzeugs, wenn das Fahrzeug fährt, das Folgendes umfasst:
- eine stromaufwärtige Kuppelmuffenklaue (51), die in Drehung fest mit der elektrischen Maschine (42) verbunden ist, eine stromabwärtige Kuppelmuffenklaue (52), die in Drehung mit den Rädern (44) fest verbunden ist, und einen Aktuator (34), der eingerichtet ist, um die zwei Kuppelmuffenklauen in Verschiebung entlang einer gemeinsamen Rotationsachse anzunähern; und
- eine elektronische Vorrichtung, die eingerichtet ist, um eine Kopplungsanfrage zu empfangen, um die elektrische Maschine (42) drehzahlzusteuern, indem ein Drehzahlsollwert derart auf sie angewandt wird, dass ein Unterschied zwischen einer Drehzahl der stromaufwärtigen Kuppelmuffenklaue (51) und einer Drehzahl der stromabwärtigen Kuppelmuffenklaue (52) reduziert wird, um die elektrische Maschine (42) auf einem Drehmomentsollwert zu steuern und um die Kuppelmuffenklauen (51, 52) einander anzunähern, bis ein formschlüssiger Zustand der zwei Kuppelmuffenklauen erhalten wird, **dadurch gekennzeichnet, dass** der Drehmomentsollwert von einer Begrenzungsfunktion des Drehmomentsollwerts begrenzt ist.

6. Kupplungssystem nach Anspruch 5, **dadurch gekennzeichnet, dass** der Drehmomentsollwert auf eine Trägheitsdrehmomentkompensation, die einer maximalen potentiellen Beschleunigung des Fahrzeugs entspricht, begrenzt ist.

7. System nach einem der Ansprüche 5 oder 6, **dadurch gekennzeichnet, dass** der Drehzahlsollwert auf einem Wert der Motordrehzahl positioniert ist.

8. System nach einem der Ansprüche 5 bis 7, **dadurch gekennzeichnet, dass** die elektronische Vorrichtung im Speicher eine Verzögerungsdauer umfasst, um zu prüfen, dass der Drehzahlunterschied während der Dauer kleiner bleibt als der vorbestimmte Schwellenwert.

9. Kraftfahrzeug, das ein System nach einem der Ansprüche 5 bis 8 umfasst, um das Verfahren nach einem der Ansprüche 1 bis 4 auszuführen.

## Claims

1. A method for coupling an electric machine (42) with running-gear wheels (44) of a vehicle when the vehicle is running, including two steps activated in succession on the basis of a coupling request:
- a step of driving the electric machine (42) up to speed, in which a rotation speed setpoint is applied to the electric machine (42) so as to reduce a difference between a speed of an upstream dog clutch (51) rotating integrally with the electric machine and a speed of a downstream dog clutch (52) rotating integrally with the wheels (44); and
- a coupling step activated following a speed difference (110) lower than a predetermined threshold, in which the electric machine (42) is slaved to a torque setpoint, and the dog clutches (51, 52) are brought together until am engaged date of the two dog clutches is obtained,
**characterized in that** the torque setpoint is limited by a limitation function of the torque setpoint.

2. The coupling method according to Claim 1, **characterized in that** the torque setpoint is limited to an inertial torque compensation corresponding to a potential maximum acceleration of the vehicle.

3. The method according to one of Claims 1 or 2, **characterized in that** the speed setpoint is positioned at a value of the wheel speed.

4. The method according to one of the preceding claims, **characterized in that** the coupling step is activated when the speed difference remains lower than the predetermined threshold for a delay time.

5. A system for coupling an electric machine (42) with running-gear wheels (44) of a vehicle when the vehicle is running, including:
- an upstream dog clutch (51) rotating integrally with the electric machine (42), a downstream dog clutch (52) rotating integrally with the wheels (44) and an actuator (34) arranged to bring the two dog clutches together in translation along a common rotation axis; and
- an electronic device arranged to receive a coupling request, for driving the electric machine (42) up to speed by applying to it a rotation speed setpoint so as to reduce a difference between a speed of the upstream dog clutch (51) and a speed of the downstream dog clutch (52) for slaving the electric machine (42) to a torque setpoint and for bringing the dog clutches (51, 52) together until an engaged state of the two dog clutches is obtained, **characterized in that** the torque setpoint is limited by a limitation function of the torque setpoint.

6. The coupling system according to Claim 5, **characterized in that** the torque setpoint is limited to an inertial torque compensation corresponding to a potential maximum acceleration of the vehicle.

7. The system according to one of Claims 5 or 6, **characterized in that** the speed setpoint is positioned at a value of the wheel speed.

8. The system according to one of Claims 5 to 7, **characterized in that** the electronic device includes in memory a delay time for verifying that the speed difference remains lower than the predetermined threshold during said time.

9. A motor vehicle including a system according to one of Claims 5 to 8 for executing the method according to one of Claims 1 to 4.
